# EUROPÄISCHE PATENTSCHRIFT

(11) **EP 4 115 209 B1**
(45) Veröffentlichungstag und Bekanntmachung des Hinweises auf die Patenterteilung: **01.05.2024**
(21) Anmeldenummer: 21709648.6
(22) Anmeldetag: 02.03.2021
(51) Int. Cl.: G01T 1/164, G01T 1/20, G01T 1/204, G01T 7/02

(54) **SZINTILLATIONSKÜVETTE ZUR MESSUNG VON IONISIERENDER STRAHLUNG UND MESSVORRICHTUNG ZUR MESSUNG VON IONISIERENDER STRAHLUNG**
SCINTILLATOR DEVICE FOR MEASURING IONIZING RADIATION AND MEASURING APPARATUS THEREFOR
DISPOSITIF DE SCINTILLATION POUR LA MESURE DE RAYONNEMENTS IONISANTS ET APPAREIL DE MESURE POUR MESURER LES RAYONNEMENTS IONISANTS

(30) Priorität: 02.03.2020 DE 102020202654
(43) Veröffentlichungstag der Anmeldung: 11.01.2023
(73) Patentinhaber: Helmholtz-Zentrum Dresden - Rossendorf e.V., 01328 Dresden (DE); VKTA - Strahlenschutz, Analytik & Entsorgung Rossendorf E. V., 01328 Dresden (DE)
(72) Erfinder: STALKE, Sebastian, 01328 Dresden (DE); STEUDTNER, Robin, 01328 Dresden (DE); GROSSMANN, Kay, 01328 Dresden (DE)
(74) Vertreter: Kutzenberger Wolff & Partner
(86) Internationale Anmeldenummer: PCT/EP2021/055094
(87) Internationale Veröffentlichungsnummer: WO 2021/175802

(56) Entgegenhaltungen:
- US-A- 4 788 436
- US-A- 4 833 326
- US-A- 5 298 753
- US-A- 5 357 114
- US-A1- 2009 050 812
- KONIJN J ET AL: "Capillary detectors", NUCLEAR INSTRUMENTS & METHODS IN PHYSICS RESEARCH. SECTION A, ELSEVIER BV * NORTH-HOLLAND, NL, Bd. 418, Nr. 1, 1. November 1998 (1998-11-01), Seiten 186-195, XP004149912, ISSN: 0168-9002, DOI: 10.1016/S0168-9002(98)00732-3
- MONNIER ET AL: "Physical methods in chemical analysis", ANALYTICA CHIMICA ACTA, ELSEVIER, AMSTERDAM, NL, vol. 9, 1 January 1953 (1953-01-01), pages 194-195, XP026621503, ISSN: 0003-2670 [retrieved on 1953-01-01]

## Beschreibung

### Hintergrund der Erfindung

Die Erfindung betrifft eine Szintillationsküvette zur Messung von ionisierender Strahlung, eine Messvorrichtung zur Messung von ionisierender Strahlung sowie ein Verfahren zur Messung von ionisierender Strahlung.

Aus dem Stand der Technik sind Szintillationsmessungen zur Messung von ionisierender Strahlung hinlänglich bekannt. Bei der Szintillationsmessung existieren zwei Varianten: Entweder ist die zu messende Probe mit dem Szintillationsmedium gemischt beziehungsweise ist in diesem gelöst oder das Szintillationsmedium wird in die Nähe der zu messenden Probe gebracht beziehungsweise in diese eingetaucht oder umgekehrt.

Bei der ersten Variante wird ein flüssiges Szintillationsmedium verwendet, in dem die Probe unter Ausbildung eines Szintillationsgemischs gelöst oder gemischt vorliegt (Liquid Szintillation Counting LSC). LSC-Systeme werden beispielsweise in den Druckschriften US 4,833,326 A und US 5,357,114 A, sowie in dem Artikel "Capillary detectors" (Konijn et al., Nuclear Instruments & Methods in Physics Research, Bd. 418, S.186-195) offenbart. Die Verwendung speziell für die Szintillationsmessung hergestellter Gele oder Festkörper ist ebenfalls möglich. Bei der zweiten Variante ist die zu messende radioaktive Probe getrennt vom Szintillationsmedium. Während die Mischung bzw. Lösung von Probe und Szintillationsmedium gemäß der ersten Variante beispielsweise eine quantitative Bestimmung mehrerer Radionuklide inklusive einer Unterscheidung von α-, β- und/oder γ-Strahlung liefern kann, wird die zweiten Variante beispielsweise für die Ermittlung einer allgemeinen, ortsaufgelösten Strahlungsstärke, teilweise mit qualitativer Aussage über die Strahlungsart, verwendet.

Für beide Varianten sind zwei unterschiedliche Arten von Störgrößen von Bedeutung. Diese Störgrößen sorgen dafür, dass das Signal des radioaktiven Zerfalls, beziehungsweise dessen Energie, nicht eins zu eins am Detektor abgebildet wird.

Die zwei Arten von Störgrößen sind:
(a) Der Einfluss von externer Strahlung welche nicht von der Probe kommt. Dadurch misst der Detektor fälschlicherweise zu viel Signal.
(b) Verluste bei der Übertragung der Zerfallsenergie auf das Szintillationsmedium und/oder nachfolgende Verluste der Intensität des Szintillationspulses, also des Szintillationslichtes. Dies bedingt, dass der Detektor fälschlicherweise zu wenig Signal misst.

Die Störgrößen führen zu einer ungenauen Zählrate für die radioaktiven Zerfälle, die gemessene Zählrate ist dann also nicht die wahre Zählrate der radioaktiven Zerfälle, sowie zu einem verfälschten Spektrum der Zerfallsenergien der Probe.

Verluste wie sie in (b) genannt sind, werden auch Quenching genannt. Es werden drei Arten von Quenching unterschieden:
(b1) apparatives Quenching, welches durch die Geometrie der Szintillationsküvette oder der Messvorrichtung bedingt ist.
(b2) chemisches Quenching bedingt durch Substanzen, welche die Energieübertragung beim Szintillationsprozess verschlechtern
(b3) Farbquenching bedingt durch Substanzen, welche das Szintillationslicht absorbieren.

Es ist eine Aufgabe der vorliegenden Erfindung die im Zusammenhang mit dem Stand der Technik genannten Nachteile zu vermindern und eine Szintillationsküvette bereitzustellen, welche zumindest apparatives Quenching effektiv reduziert und eine deutliche Effizienzsteigerung der Messung ionisierender Strahlung ermöglicht.

Die Aufgabe der vorliegenden Erfindung wird gelöst durch eine Szintillationsküvette nach Anspruch 1. Demgemäß wird eine Szintillationsküvette zur Messung ionisierender Strahlung bereitgestellt, wobei die Szintillationsküvette eine Lichtleitungsstruktur mit einer Lichtleiter-Wandung mit einem ersten Brechungsindex und einem Fenster mit einem zweiten Brechungsindex aufweist, wobei der erste Brechungsindex kleiner ist als der zweite Brechungsindex, wobei die Szintillationsküvette ein in der Szintillationsküvette angeordnetes Szintillationsmedium mit einem vorgegebenen Brechungsindex, der größer als der erste Brechungsindex ist, aufweist. Die Lichtleiter-Wandung im Sinne der vorliegenden Erfindung ist eine Wandung bzw. Wand der Lichtleitungsstruktur. Als Wandung bzw. Wand der Lichtleitungsstruktur erfüllt die Lichtleiter-Wandung die Voraussetzung, dass der Brechungsindex der Lichtleiter-Wandung (d.h. der erste Brechungsindex) geringer ist als der Brechungsindex des Fensters der Szintillationsküvette (d.h. der zweite Brechungsindex). Die Lichtleiter-Wandung einer solchen Lichtleitungsstruktur kann auch als Lichtleiter-Mantel bezeichnet werden. Die erfindungsgemäße Szintillationsküvette ermöglicht es, in der Szintillationsküvette entstehende Lichtblitze auf vorteilhafte Weise sehr effizient gezielt aus der Szintillationsküvette zu leiten und vorzugsweise einem oder mehreren Photomultiplier und/oder einem anderen Detektor zuzuführen. Durch die geschickte Anordnung der unterschiedlichen Brechungsindizes ist es möglich, Szintillationslicht durch Totalreflexion an der Lichtleiter-Wandung zum Fenster zu leiten und durch das Fenster hindurch aus der Küvette austreten zu lassen. Die Außenwand der Küvette kann auch als Küvetten-Wandung bezeichnet werden. Das Fenster ist vorzugsweise von einem Abschnitt der Außenwand der Küvette gebildet und kann auch als Lichtaustritts-Fenster bezeichnet werden. Es kann z.B. vorgesehen sein, dass das Lichtaustritts-Fenster durch eine Stirnfläche bzw. Bodenfläche der Küvette gebildet ist, z.B. durch eine ebene Stirnfläche bzw. ebene Bodenfläche.

Eine Szintillationsküvette im Sinne der vorliegenden Erfindung ist ein Behältnis zur Aufbewahrung einer Probe während einer Szintillationsmessung der Probe. Die Lichtleiter-Wandung weist bevorzugt die Form einer Mantelfläche eines Zylinders, besonders bevorzugt eines Kreiszylinders, auf.

Denkbar ist, dass die Lichtleiter-Wandung entlang einer Außenwand der Szintillationsküvette angeordnet ist. Denkbar ist, dass die Lichtleiter-Wandung durch die Außenwand der Szintillationsküvette gebildet ist. Es kann z.B. vorgesehen sein, dass die Lichtleiter-Wandung durch die Mantelfläche der Küvetten-Wandung gebildet ist. Gemäß einer Ausführungsform ist vorgesehen, dass die Lichtleiter-Wandung durch die Mantelfläche der Küvetten-Wandung gebildet ist und das Lichtaustritts-Fenster durch eine Stirnfläche bzw. Bodenfläche der Küvette gebildet ist. Demgemäß können sowohl die Lichtleiter-Wandung als auch das Lichtaustritts-Fenster von Abschnitten der Küvetten-Wandung gebildet sein, wobei die Küvetten-Wandung zwei unterschiedliche Brechungsindizes aufweist (z.B. durch entsprechende Materialzusammensetzung). Denkbar ist auch, dass ein Teil der Lichtleiter-Wandung durch die Außenwand der Szintillationsküvette gebildet ist und dass ein anderer Teil der Lichtleiter-Wandung nicht durch die Außenwand der Szintillationsküvette gebildet ist, sondern beispielsweise im Inneren der Szintillationsküvette angeordnet ist.

Denkbar ist auch, dass die Lichtleiter-Wandung (teilweise oder vollständig) im Inneren der Szintillationsküvette angeordnet ist. Gemäß dieser Ausführungsform kann die Küvetten-Wandung mit einem einzigen Brechungsindex ausgebildet sein und es ist nicht erforderlich, dass die Küvetten-Wandung zwei unterschiedliche Brechungsindizes aufweist.

Die Szintillationsküvette ist zur Verwendung mit einem Szintillationsmedium vorgesehen, wobei die Lichtleiter-Wandung einen geringeren Brechungsindex aufweist als das Szintillationsmedium. Ein Szintillationsmedium im Sinne der vorliegenden Erfindung ist ein Medium, welches durch Wechselwirkung mit einer ionisierenden Strahlung, beispielsweise α-, β oder γ-Strahlung, Szintillationslicht abgibt. Ein Szintillationsmedium kann z.B. ein Medium sein, welches Moleküle oder andere Bestandteile aufweist, welche durch Wechselwirkung mit einer ionisierenden Strahlung, beispielsweise α-, β oder γ-Strahlung, in einen angeregten Zustand übergehen und aus dem angeregten Zustand unter Aussendung von Szintillationslicht in einen niederenergetischeren bzw. nicht-angeregten Zustand übergehen. Zusätzlich dazu kann vorgesehen sein, dass das Lichtaustritts-Fenster einen größeren Brechungsindex aufweist als das Szintillationsmedium. Die Szintillationsküvette weist somit ein Szintillationsmedium auf (d.h. das Szintillationsmedium ist in der Szintillationsküvette angeordnet), wobei die Lichtleiter-Wandung einen kleineren Brechungsindex aufweist als das Szintillationsmedium und/oder das Lichtaustritts-Fenster einen größeren Brechungsindex aufweist als das Szintillationsmedium. Vorzugsweise ist das Fenster an einer Stirnfläche der Küvetten-Wandung angeordnet bzw. von einer Stirnfläche der Küvetten-Wandung gebildet.

Vorteilhafte Ausgestaltungen und Weiterbildungen der Erfindung sind den Unteransprüchen sowie der Beschreibung unter Bezugnahme auf die Zeichnungen entnehmbar.

Die im Folgenden offenbarten Merkmale, Vorteile und Ausführungsformen beziehen sich auf alle erfindungsgemäßen Gegenstände.

Vorzugsweise ist die Lichtleiter-Wandung aus PE und/oder FEP und/oder einem Verbund aus PE und FEP hergestellt

Gemäß einer bevorzugten Ausführungsform der vorliegenden Erfindung ist vorgesehen, dass die Lichtleiter-Wandung zum Totalreflektieren von Szintillationslicht in Richtung des Fensters geeignet ist, wobei die Lichtleiter-Wandung als Mantel eines Lichtleiters vorgesehen ist. Dies ermöglicht es, durch Totalreflexion im Lichtleiter Licht aus dem Szintillationsmedium mit einer sehr hohen Effizienz gezielt aus der Szintillationsküvette zu leiten und beispielsweise einem Photomultiplier oder einem anderen Detektor zuzuführen. Durch den Akzeptanzwinkel des Lichtleiters ist ferner der Öffnungswinkel, mit dem das Szintillationslicht aus der Szintillationsküvette austritt, definiert und im Vergleich zu Szintillationsküvetten aus dem Stand der Technik deutlich reduziert.

Gemäß einer bevorzugten Ausführungsform der vorliegenden Erfindung ist vorgesehen, dass die Szintillationsküvette zumindest im Bereich des Fensters lichtdurchlässig für das Szintillationslicht ist, wobei die Szintillationsküvette vorzugsweise ein Szintillationsfläschchen ist. Demgemäß ist die Szintillationsküvette zur Verwendung mit einem Szintillationsmedium vorgesehen bzw. weist ein Szintillationsmedium auf, von dem bei Wechselwirkung mit ionisierender Strahlung Szintillationslicht abgegeben wird, wobei das Fenster für das Szintillationslicht durchlässig ist. Das Fenster kann insbesondere derart ausgebildet sein, dass die Intensität des Szintillationslichts sich beim Durchlaufen des Fensters um höchstens 50 % vermindert, z.B. um höchstens 25 %, bevorzugt um höchstens 10 %. Ein Szintillationsfläschchen im Sinne der vorliegenden Erfindung ist auch als Vial bekannt. Gemäß einer bevorzugten Ausführungsform der vorliegenden Erfindung ist vorgesehen, dass die Lichtleiter-Wandung durch eine umlaufende Mantelfläche der Szintillationsküvette gebildet ist. Denkbar ist dazu, dass die Lichtleiter-Wandung durch die Küvetten-Wandung gebildet ist. Dies reduziert auf vorteilhafte Weise die Anzahl notwendiger Bauteile und vereinfacht somit die Konstruktion der Szintillationsküvette.

Gemäß einer bevorzugten Ausführungsform der vorliegenden Erfindung ist vorgesehen, dass die Lichtleiter-Wandung zumindest teilweise im Inneren der Szintillationsküvette angeordnet ist. Dadurch ist es auf vorteilhafte Weise möglich, den Innenraum der Szintillationsküvette durch zumindest einen Teil der Lichtleiter-Wandung zu teilen und/oder die Lichtleiter-Wandung von der Küvetten-Wandung zu beabstanden.

Gemäß einer bevorzugten Ausführungsform der vorliegenden Erfindung ist vorgesehen, dass das Fenster durch eine Stirnfläche der Szintillationsküvette gebildet ist. Dadurch wird die Geometrie der Szintillationsküvette geschickt zur Lichtleitung genutzt, indem das Szintillationslicht entlang einer langen Seite der Szintillationsküvette zur Stirnfläche geleitet wird.

Gemäß einer bevorzugten Ausführungsform der vorliegenden Erfindung ist vorgesehen, dass das Szintillationsmedium einen vorgegebenen Brechungsindex, der kleiner als der zweite Brechungsindex ist, aufweist. Dies ermöglicht auf vorteilhafte Weise die Lichtleitung durch den Lichtleiter als Flüssiglichtleiter unter Totalreflexion an der Lichtleiter-Wandung und Austritt durch das Fenster.

Gemäß einer bevorzugten Ausführungsform der vorliegenden Erfindung ist vorgesehen, dass die Szintillationsküvette wenigstens einen weiteren Lichtleiter mit einer Lichtleiter-Wandung und/oder einer weiteren Lichtleiter-Wandung aufweist, wobei die weitere Lichtleiter-Wandung einen geringeren Brechungsindex aufweist als das Fenster und/oder ein weiteres Fenster, wobei die Lichtleiter-Wandung und/oder die weitere Lichtleiter-Wandung als Mantel des weiteren Lichtleiters vorgesehen sind, wobei der wenigstens eine weitere Lichtleiter parallel zum Lichtleiter angeordnet ist. Gemäß einer Ausführungsform ist die Szintillationsküvette zur Verwendung mit einem Szintillationsmedium vorgesehen oder weist ein Szintillationsmedium auf (d.h. das Szintillationsmedium ist in der Szintillationsküvette angeordnet), wobei die weitere Lichtleiter-Wandung einen kleineren Brechungsindex aufweist als das Szintillationsmedium und/oder das weitere Fenster einen größeren Brechungsindex aufweist als das Szintillationsmedium. Vorzugsweise ist das Volumen, aus welchem Licht geleitet wird, in den Lichtleiter und den wenigstens einen weiteren Lichtleiter unterteilt. Vorstellbar ist, dass die Szintillationsküvette ein Bündel aus Lichtleitern aufweist. Denkbar ist, dass die Lichtleiter jeweils einen rohrförmigen Mantel aufweisen. Denkbar ist, dass eine Querschnittsfläche eines einzelnen Lichtleiters des Bündels von Lichtleitern kleiner ist als 4 mm². Auf diese Weise können Kapillarkräfte genutzt werden, um die Probe und/oder das Szintillationsmedium und/oder das Szintillationsgemisch z.B. bei vor-Ort-Probenahmen, leichter aufzunehmen. Dabei werden die Kerne der Lichtleiter des Bündels von Lichtleitern durch die Probe und/oder das Szintillationsmedium und/oder das Szintillationsgemisch gebildet. Zur Minimierung von Luftbläschen kann die Szintillationsküvette während des Befüllens mehrfach auf den Kopf gestellt werden bzw. während der Messung auf dem Kopf stehen. Auf dem Kopf im Sinne der vorliegenden Erfindung bedeutet mit einer Einfüllöffnung der Szintillationsküvette vom Erdboden weg ausgerichtet angeordnet.

Gemäß einer bevorzugten Ausführungsform der vorliegenden Erfindung ist vorgesehen, dass ein Szintillationsmedium zumindest teilweise innerhalb der Lichtleiter-Wandung und/oder der weiteren Lichtleiter-Wandung angeordnet ist, wobei durch das Szintillationsmedium und die Lichtleiter-Wandung und/oder die weitere Lichtleiter-Wandung ein Flüssiglichtleiter bzw. ein weiterer Flüssiglichtleiter gebildet ist. Vorzugsweise weist ein Kern des Lichtleiters und/oder des weiteren Lichtleiters das Szintillationsmedium auf. Besonders bevorzugt ist der Kern des Flüssiglichtleiters und/oder des weiteren Flüssiglichtleiters durch das Szintillationsmedium oder das Szintillationsgemisch gebildet. Vorzugsweise ist das Szintillationsmedium flüssig oder gelartig. Dies ermöglicht es, durch Totalreflexion im Flüssiglichtleiter Licht aus dem Szintillationsmedium mit einer sehr hohen Effizienz gezielt aus der Szintillationsküvette zu leiten und beispielsweise einem Photomultiplier oder einem anderen Detektor zuzuführen. Durch den Akzeptanzwinkel des Flüssiglichtleiters ist ferner der Öffnungswinkel, mit dem das Szintillationslicht aus der Szintillationsküvette austritt, definiert und im Vergleich zu Szintillationsküvetten aus dem Stand der Technik deutlich reduziert. Zur Messung von ionisierender Strahlung einer Probe wird die Probe vorzugsweise mit dem Szintillationsmedium gemischt oder in diesem gelöst, vorzugsweise unter Ausbildung eines flüssigen Szintillationsgemischs. Kommt es zu einem radioaktiven Zerfall in der Probe, kann ein bei dem Zerfall emittiertes Teilchen (beispielsweise ein α-, β- oder γ-Teilchen) durch Wechselwirkung, beispielsweise durch Stoßprozesse, Moleküle des Szintillationsmediums zur Emission von Licht anregen. Das emittierte Licht wird mittels des Flüssiglichtleiters gezielt aus der Szintillationsküvette geleitet und kann anschließend detektiert werden.

Es kann vorgesehen sein, dass die zu untersuchende Probe sich innerhalb und/oder außerhalb des Flüssiglichtleiters befindet. Bevorzugt ist vorgesehen, dass sowohl die Probe als auch das Szintillationsmedium innerhalb des Flüssiglichtleiters angeordnet sind. Es kann z.B. vorgesehen sein, dass das Szintillationsmedium flüssig ist, die Probe bzw. das Probenmaterial unter Ausbildung eines flüssigen Szintillationsgemischs mit dem Szintillationsmedium gemischt bzw. in diesem gelöst wird, und das flüssige Szintillationsgemisch unter Ausbildung eines Flüssiglichtleiters innerhalb der Lichtleitungsstruktur angeordnet ist.

Beispielhaft, jedoch nicht ausschließlich ist vorgesehen, dass die Szintillationsküvette und/oder die Küvetten-Wandung aus Polyethylen (PE) und/oder Fluoriertem Ethylen-Propylen (FEP) und/oder einem Verbund aus PE und FEP hergestellt ist. Denkbar ist auch, dass die Szintillationsküvette eine Hülle und/oder einen Mantel aus Polyethylen (PE) und/oder Fluoriertem Ethylen-Propylen (FEP) und/oder einem Verbund aus PE und FEP aufweist. Im Falle, dass von der Küvetten-Wandung sowohl eine Lichtleiter-Wandung als auch ein Lichtaustritts-Fenster gebildet sind, kann die Küvette im Bereich der Lichtleiter-Wandung aus einem anderen Material bestehen als im Bereich des Lichtaustritts-Fensters.

Vorzugsweise ist vorgesehen, dass die Szintillationsküvette mindestens an ihren Stirnflächen lichtdurchlässig für das Szintillationslicht ist. Demgemäß kann vorgesehen sein, dass das Lichtaustritts-Fenster von einer Stirnfläche der Küvette gebildet ist. Für die Szintillationsküvette sind längliche Geometrien vorzugsweise vorgesehen. Denkbar ist, dass die Szintillationsküvette zylinderförmig ist. Insbesondere ist denkbar, dass die Szintillationsküvetten kreiszylinderförmig ist oder die Form eines elliptischen Zylinders aufweist. Denkbar ist aber auch, dass die Szintillationsküvette schlauchförmig ist. Ferner ist denkbar, dass die Szintillationsküvette quaderförmig, würfelförmig oder prismenförmig ist. Vorzugsweise ist vorgesehen, dass die Szintillationsküvette ein Volumen im Bereich von 1 ml bis 100 ml aufweist. In einer weiteren beispielhaften Ausführungsform sind auch Mikrovolumina (z.B. in Form von flüssiglichtleitenden Pipettenspitzen) oder sehr große Volumina (z.B. in Form von flüssiglichtleitenden Pipelines) vorgesehen. In einer weiteren bevorzugten Ausführung ist vorgesehen, dass die Szintillationsküvette zumindest teilweise aus einem oder mehreren gasdurchlässigen Kunststoffen gefertigt ist. Dies ermöglicht, dass die Szintillationsküvette gleichzeitig als Probensammler bei gasförmigen radioaktiven Substanzen, beispielsweise Radon fungiert.

Gemäß einer bevorzugten weiteren Ausführungsform der vorliegenden Erfindung ist vorgesehen, dass die Szintillationsküvette eine Haupterstreckungsrichtung aufweist, wobei der Lichtleiter parallel zur Haupterstreckungsrichtung angeordnet ist. Dies ermöglicht auf vorteilhafte Weise, den Lichtleiter entlang einer langen Ausdehnung der Szintillationsküvette auszurichten und somit eine optimale Geometrie zur Lichtleitung sicherzustellen. Denkbar ist, dass bei einer zylinderförmigen Szintillationsküvette die Haupterstreckungsrichtung die Höhenrichtung des Zylinders, also eine senkrecht zu den Grundflächen angeordnete Verbindungslinie zwischen den Zentren der Grundflächen des Zylinders, ist. Vorzugsweise wird der Lichtleiter entlang der Höhe der Szintillationsküvette angeordnet, so dass Szintillationslicht aus dem Lichtleiter am Boden bzw. an der Stirnfläche der Szintillationsküvette austreten kann.

Gemäß einer weiteren Ausführungsform der Erfindung ist vorgesehen, dass zusätzliche reflektierende Elemente um den oder die Lichtleiter angeordnet sind. Vorzugsweise sind die reflektierenden Elemente zum Reflektieren des Szintillationslichtes geeignet. Vorzugsweise weisen die reflektierenden Elemente einen Reflektor auf bzw. bilden einen Reflektor. Der Reflektor ist ein Reflektor zum Reflektieren des Szintillationslichtes. Hierbei ist der zusätzliche Reflektor entweder so angeordnet, dass vom Lichtleiter nicht reflektiertes Licht durch einen Reflektor wieder in die Probe zurückreflektiert wird oder der Reflektor ist so angeordnet, dass das Licht möglichst direkt auf den Detektor geleitet wird. Gemäß einer Ausführungsform der Erfindung ist vorgesehen, dass die Lichtleiter-Wandung und/oder die weitere Lichtleiter-Wandung und/oder die Küvetten-Wandung an einer Außenfläche eine Verspiegelung zum Reflektieren des Szintillationslichts aufweist. Vorzugsweise ist die Verspiegelung die gesamte Außenfläche der Lichtleiter-Wandung bzw. der weiteren Lichtleiter-Wandung bzw. der Küvetten-Wandung bis auf einen als Austrittsöffnung bzw. Fenster für das Szintillationslicht fungierenden Abschnitt überdeckend angeordnet. Vorzugsweise ist die Verspiegelung derart ausgebildet, dass von ihr Szintillationslicht an der Außenfläche der Lichtleiter-Wandung bzw. der weiteren Lichtleiter-Wandung bzw. der Küvetten-Wandung in das Innere des Lichtleiters zurückreflektiert wird. Damit wird das Szintillationslicht am unerwünschten Verlassen des Lichtleiters bzw. der Küvette gehindert.

Ein weiterer Gegenstand der vorliegenden Erfindung zur Lösung der zuvor genannten Aufgabe ist eine Anordnung zur Erfassung ionisierender Strahlung, aufweisend eine erfindungsgemäße Szintillationsküvette, ein in der Szintillationsküvette angeordnetes Szintillationsmedium und einen Detektor, wobei der Detektor zum Erfassen von aus dem Fenster austretendem Szintillationslicht angeordnet ist. Es kann z.B. vorgesehen sein, dass das Lichtaustritts-Fenster durch eine Stirnfläche der Szintillationsküvette gebildet ist und der Detektor vor der als Lichtaustritts-Fenster fungierenden Stirnfläche angeordnet ist, so dass von dem Detektor aus dem Lichtaustritts-Fenster austretendes Szintillationslicht erfassbar ist.

Vorzugsweise ist der Lichtleiter zum Leiten von Licht vom Szintillationsmedium hin zum Detektor angeordnet. Mit der erfindungsgemäßen Anordnung ist es möglich, Quenching zu verringern, indem der Anteil des in der Szintillationsküvette erzeugten Szintillationslichtes, welcher auf den Detektor trifft, deutlich vergrößert wird. Durch den geringeren Öffnungswinkel des aus der Szintillationsküvette austretenden Szintillationslichtes sind kleinere Detektorflächen und kompaktere Bauweisen möglich. Als Detektoren sind vorzugsweise Lichtdetektoren vorgesehen, mit welchen das mittels des Szintillationsmediums erzeugte Szintillationslicht erfassbar ist. Derartige Lichtdetektoren können beispielsweise als Photodetektor, Photodiode, Photomultiplier, Phototransistor oder Photowiderstand ausgebildet sein. Der Lichtdetektor ist vorzugsweise derart ausgebildet, dass von ihm auftreffendes Szintillationslicht in ein beispielsweise elektrisches Detektorsignal umgewandelt wird, mittels dessen das Szintillationslicht erfassbar ist, und wird auch als Szintillationslicht-Detektor bezeichnet. Als Detektoren sind vorzugsweise (Si)PMT-Detektoren und/oder CCD-Detektoren vorgesehen.

Die kompakte Form kann es zudem ermöglichen, die Szintillationsküvette auch an bereits bestehende, z.B. fluoreszenzspektroskopische, Systeme mit PMT-Detektor oder CCD-Detektor anzukoppeln.

Vorzugsweise ist vorgesehen, z.B. zur Minimierung des Einflusses von externer Strahlung, welche nicht von der Probe kommt, eine Koinzidenzschaltung oder Antikoinzidenzschaltung mit einer Mehrzahl von Detektoren zu verwenden. Dazu ist vorzugsweise vorgesehen, dass mindestens ein Detektor und ein weiterer Detektor der Messvorrichtung in einer Koinzidenzschaltung oder Antikoinzidenzschaltung miteinander verschaltet sind. Vorzugsweise weist die Messvorrichtung ein oder mehrere externe Referenznuklide auf.

Gemäß einer bevorzugten weiteren Ausführungsform der vorliegenden Erfindung ist vorgesehen, dass die Anordnung einen Probenhalter umfasst, wobei die Szintillationsküvette in dem Probenhalter angeordnet ist, wobei der Probenhalter an seiner dem Detektor zugewandten ersten Seite eine Öffnung aufweist, wobei der Probenhalter vorzugsweise zumindest an seiner der ersten Seite gegenüberliegenden zweiten Seite einen Reflektor zum Reflektieren von Licht in Richtung des Detektors aufweist. Es kann beispielsweise vorgesehen sein, dass der Probenhalter an seiner dem Detektor zugewandten ersten Seite die Öffnung aufweist, wobei der Probenhalter vorzugsweise zumindest an seiner der ersten Seite gegenüberliegenden zweiten Seite einen Reflektor zum Reflektieren von aus dem Lichtleiter austretenden Szintillationslichtes in den Flüssiglichtleiter zurück und/oder in Richtung zu dem Detektor hin aufweist. Damit wird Szintillationslicht, welches ursprünglich nicht in Richtung des Detektors verläuft, am Reflektor reflektiert und, vorzugsweise durch den Flüssiglichtleiter, zum Detektor geleitet und detektiert.

Gemäß einer bevorzugten weiteren Ausführungsform der vorliegenden Erfindung ist vorgesehen, dass der Detektor einen Silizium-Photomultiplier aufweist. Silizium-Photomultiplier (SiPMs) sind herkömmlichen Photomultipliern in vielen Belangen überlegen. Aufgrund der relativ geringen Detektionsfläche der Silizium-Photomultiplier ist deren Einsatz bei der Messung ionisierender Strahlung bisher unüblich. Erst die Kombination mit der erfindungsgemäßen Messvorrichtung ermöglicht einen sinnvollen Einsatz der Silizium-Photomultiplier.

Denkbar ist, dass der Detektor eine Detektionsfläche aufweist, die maximal dreimal so groß ist wie die Fläche des Fensters, wobei die Detektionsfläche bevorzugt maximal genauso groß wie die Fläche des Fensters.

Gemäß einer bevorzugten weiteren Ausführungsform der vorliegenden Erfindung ist vorgesehen, dass die Anordnung einen weiteren Detektor aufweist, wobei die Szintillationsküvette zwischen dem Detektor und dem weiteren Detektor angeordnet ist. Dies ermöglicht auf vorteilhafte Weise eine Koinzidenzmessung und bietet damit die Möglichkeit, Messergebnisse zu überprüfen und Messwerte anzupassen. Vorzugsweise ist vorgesehen, dass der weitere Detektor einen Silizium-Photomultiplier aufweist. Dazu ist vorzugsweise ferner vorgesehen, dass der Probenhalter eine weitere Öffnung zum Hindurchtreten des Szintillationslichts aufweist, wobei der weitere Detektor vor der weiteren Öffnung derart angeordnet ist, dass von ihm durch die weitere Öffnung hindurchtretendes Szintillationslicht detektierbar ist. Denkbar ist, dass der Detektor und der weitere Detektor gleichartige bzw. identisch ausgebildete Detektoren sind.

Gemäß einer bevorzugten Ausführungsform der vorliegenden Erfindung ist vorgesehen, dass die Anordnung zwei Detektoren aufweist, wobei die Szintillationsküvette zwischen beiden Detektoren angeordnet ist. Dies ermöglicht eine Koinzidenzmessung. Hierbei werden bevorzugt nur die Ereignisse registriert, welche innerhalb einer Koinzidenzzeit den Detektor und den weiteren Detektor ansprechen. Zusätzlich zur Erhöhung der apparativen Effizienz durch die Szintillationsküvette können auf diese Weise die noch verbleibendenden, gequenchten Szintillationspulse verworfen werden, wodurch ein weniger gequenchtes Zerfallsspektrum erhalten wird.

Gemäß einer bevorzugten weiteren Ausführungsform der vorliegenden Erfindung ist vorgesehen, dass die Anordnung ein Referenznuklid zur Kalibrierung von Messwerten aufweist. Dies ermöglicht eine Kalibrierung der Messung anhand des Referenznuklides vorzunehmen. Denkbar ist, dass die Zählrate und/oder die gemessenen Energien anhand der Kalibrierung korrigiert werden.

Gemäß einer bevorzugten weiteren Ausführungsform der vorliegenden Erfindung ist vorgesehen, dass die Anordnung eine Abschirmung, vorzugsweise eine Bleiabschirmung, aufweist. Dies ermöglicht, externe ionisierende Strahlung weitestgehend abzuschirmen und damit eine Verfälschung der Messergebnisse zu reduzieren. Vorzugsweise ist vorgesehen, dass die Abschirmung derart ausgebildet ist, dass die Szintillationsküvette und/oder der Probenhalter und/oder der Detektor und/oder der weitere Detektor innerhalb der Abschirmung angeordnet bzw. von der Abschirmung umhüllt sind. Vorzugsweise ist die Abschirmung in Form einer Außenumhüllung vorgesehen. Die Abschirmung ist dabei eine Abschirmung zum Abschirmen vor von außerhalb der Szintillationsküvette in dieselbe eintretender ionisierender Strahlung.

Vorzugsweise ist vorgesehen, dass die Anordnung einen Überwachungsdetektor zum Messen externer ionisierender Strahlung aufweist. Ein Überwachungsdetektor im Sinne der vorliegenden Erfindung ist beispielsweise ein sogenannter Guarddetektor, welcher von außen in die Anordnung eindringende ionisierende Strahlung misst. Damit ist es vorteilhaft möglich, die durch die externe ionisierende Strahlung hervorgerufene Verfälschung der Messergebnisse zu korrigieren. Vorzugsweise ist vorgesehen, eine Koinzidenz-/Antikoinzidenzschaltung mit einer Mehrzahl von Detektoren zu verwenden. Dazu ist vorzugsweise vorgesehen, dass mindestens ein Detektor für Probe und Szintillationsmedium und mindestens ein weiterer Detektor nur für das Szintillationsmedium, der Anordnung in einer Antikoinzidenzschaltung miteinander verschaltet sind. Vorzugsweise weist die Anordnung zusätzlich ein oder mehrere externe Referenznuklide auf.

In einem Beispiel, das nicht Teil der beanspruchten Erfindung formt, wird ein Verfahren zur Messung von ionisierender Strahlung erwähnt, wobei eine radioaktive Probe mit einem Szintillationsmedium gemischt oder in dem Szintillationsmedium gelöst wird, wobei Szintillationslicht von dem Szintillationsmedium mittels eines Flüssiglichtleiters hin zu einem Detektor geleitet wird. Vorzugsweise ist dazu vorgesehen, dass eine erfindungsgemäße Szintillationsküvette und/oder eine erfindungsgemäße Anordnung verwendet werden. Das Szintillationsmedium und/oder das Szintillationsgemisch sind bevorzugt flüssig.

Die radioaktive Probe wird dabei vorzugsweise chemisch vorab aufgearbeitet und/oder direkt mit dem Szintillationsmedium gemischt. Hierbei wird das Gemisch aus Probe und Szintillationsmedium anschließend vorzugsweise in flüssiger oder gelartiger Konsistenz vorliegen. Das Szintillationsmedium hat für die Wellenlängen des Szintillationslichtes vorzugsweise eine Attenuierungslänge, die größer als 0.5 m, bevorzugt größer als 1 m ist und/oder eine Wasseraufnahmekapazität, welche bevorzugt bei mindestens 10 Gewichtsprozent, bevorzugt bei mindestens 50 Gewichtsprozent liegt. Die Attenuierungslänge ist die Wegstrecke nach der Ausgangsintensität eines Lichtstrahls auf etwa 37% abgeklungen ist. Die Wasseraufnahmekapazität bezeichnet die Menge an Wasser, die ohne Phasenbildung in einem Stoff oder Medium gemischt werden kann. Die Aufnahme der gemischten Probe erfolgt bevorzugt über simples Eingießen, das Aufziehen durch Spritzen oder Kapillarkräfte oder über Membran-, Kreisel oder Peristaltikpumpen. Für die Messung werden bevorzugt Koinzidenzschaltungen mit zwei Detektoren oder Schaltungen mit einem Detektor und externem Reflektor verwendet. Zur Korrektur des Quenchings wird vorzugsweise begleitend ein externes Radionuklid oder die SIS-Methode verwendet werden. In Messbereichen mit hoher externer ionisierender Strahlung kommen vorzugsweise zusätzlich Bleiabschirmungen oder Überwachungsdetektoren zum Einsatz. Da die Minimierung des Quenchings mit einer Verbreiterung der Spektren hin zu höheren Kanälen einhergeht, kann eine mathematische Trennung verschiedener Nuklide in der Probe, z.B. mittels Endpunktbestimmung, vorteilhafter anwendbar sein als beim bisherigen Stand der Technik möglich.

Vorzugsweise wird die Effizienz der Szintillationsmessung mit einem oder mehreren externen Referenznukliden ermittelt und geräteseitig eine direkte Korrektur der Verluste durchgeführt. Vorzugsweise wird die Szintillationsmessung durch Zugabe eines Standardnuklids zur Probe oder durch Quenchkurven korrigiert. Vorzugsweise ist als Variante zur Quenchkorrektur die Ermittlung des spektralen Schwerpunkts (SIS) und der anschließende Rückschluss auf die Effizienz der SC Messung mit Hilfe von Tabellen vorgesehen. Vorstellbar ist, während der Szintillationsmessung höhere Beschränkungen bezüglich der vom Detektor gezählten Pulse (s.g. Triple Coincidence Counting) zur Quenchkorrektur zu verwenden. Hierbei wird die Effizienz der Szintillationsmessung vorzugsweise über das Verhältnis der von drei Detektoren gezählten Ereignisse zu den von zwei Detektoren gezählten Ereignissen (Triple-Double-Coincidence-Ratio) ermittelt.

**Tabelle1: Vorzugsweise vorgesehene Verfahren zur Quenchkorrektur**

| Methode | Kurzbeschreibung | Vorteile |
|---|---|---|
| *SIS* | Spektraler Index des Samples (Schwerpunkt des Spektrums), Auswertemethode | Schnell, günstig, ohne weiteres Equipment, gute Anwendbarkeit |
| *tSIE* | transformierter Spektraler Index des Externen Standards, Messung des extern angeregten Compton Spektrums der Probe und Vergleich mit nichtgequenchtem Compton Spektrum, Messmethode | Sehr präzise, auch für stark gequenchte Proben und niedrige Zählraten |
| *TDCR* | Triple-Double-Coincidence-Ratio Vergleich zwischen Zählrate alle drei Detektoren und Zählrate zwei von drei Detektoren, Messmethode | Spektrum hat bereits ohne Korrektur einen niedrigeren Quench, da Szintillationspulse niedriger Intensität verworfen werden, TDCR Wert wird zusätzlich zur Korrektur verwendet |
| Interner Standard | Zugabe eines bekannten Radionuklids zur Probe und Ermittlung der Effizienz, direkte Messmethode | Ist für alle LSC Geräte verwendbar |

Bei allen in der Tabelle 1 genannten Methoden handelt es sich um Methoden zur Ermittlung der Effizienz einer Szintillationsmessung. Die Effizienz wird vorzugsweise anschließend für eine Korrektur der Daten verwendet.

Alle vorstehenden Ausführungen unter "Offenbarung der Erfindung" gelten gleichermaßen für die erfindungsgemäße Szintillationsküvette, und die erfindungsgemäße Anordnung.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- Figur 1: zeigt eine schematische Ansicht einer Anordnung gemäß einer beispielhaften Ausführungsform der vorliegenden Erfindung mit einer Szintillationsküvette gemäß einer beispielhaften Ausführungsform der vorliegenden Erfindung.
- Figur 2: zeigt eine schematische Ansicht einer Anordnung gemäß einer beispielhaften Ausführungsform der vorliegenden Erfindung mit einer Szintillationsküvette gemäß einer beispielhaften Ausführungsform der vorliegenden Erfindung.
- Figur 3: zeigt eine schematische Ansicht einer Anordnung gemäß einer beispielhaften Ausführungsform der vorliegenden Erfindung mit einer Szintillationsküvette gemäß einer beispielhaften Ausführungsform der vorliegenden Erfindung.
- Figur 4: zeigt eine schematische Ansicht einer Anordnung gemäß einer beispielhaften Ausführungsform der vorliegenden Erfindung mit einer Szintillationsküvette gemäß einer beispielhaften Ausführungsform der vorliegenden Erfindung.
- Figur 5: zeigt eine schematische Ansicht einer Anordnung gemäß einer beispielhaften Ausführungsform der vorliegenden Erfindung mit einer Szintillationsküvette gemäß einer beispielhaften Ausführungsform der vorliegenden Erfindung.
- Figur 6: zeigt schematisch die Stirnfläche der Szintillationsküvette aus Figur 5.
- Figur 7: zeigt eine schematische Ansicht einer Anordnung gemäß einer beispielhaften Ausführungsform der vorliegenden Erfindung mit einer Szintillationsküvette im direkten Kontakt mit einem Detektor und einem weiteren Detektor/ Reflektor.
- Figur 8: zeigt eine schematische Ansicht einer Anordnung gemäß einer beispielhaften Ausführungsform der vorliegenden Erfindung mit mehreren Flüssiglichtleitern.
- Figur 9: zeigt eine schematische Ansicht der Stirnfläche von Figur 8.
- Figur 10: zeigt einen schematischen Aufbau einer modularen Anordnung gemäß einer beispielhaften Ausführungsform der vorliegenden Erfindung.
- Figur 11: zeigt exemplarisch eine schematische Verwendung einer Anordnung gemäß einer beispielhaften Ausführungsform der vorliegenden Erfindung zusammen mit einem externen Referenznuklid und einem Überwachungsdetektorsystem.
- Figur 12a: zeigt exemplarisch die Verwendung einer Szintillationsküvette gemäß einer beispielhaften Ausführungsform der vorliegenden Erfindung in einer Anordnung gemäß einer beispielhaften Ausführungsform der vorliegenden Erfindung am Beispiel der Bestimmung von ¹⁴C.
- Figur 12b: zeigt eine alternative Ausführung von Figur 12a in welcher der Detektor bzw. der Detektor/Reflektor fest mit der Szintillationsküvette verbunden ist.

### Ausführungsformen der Erfindung

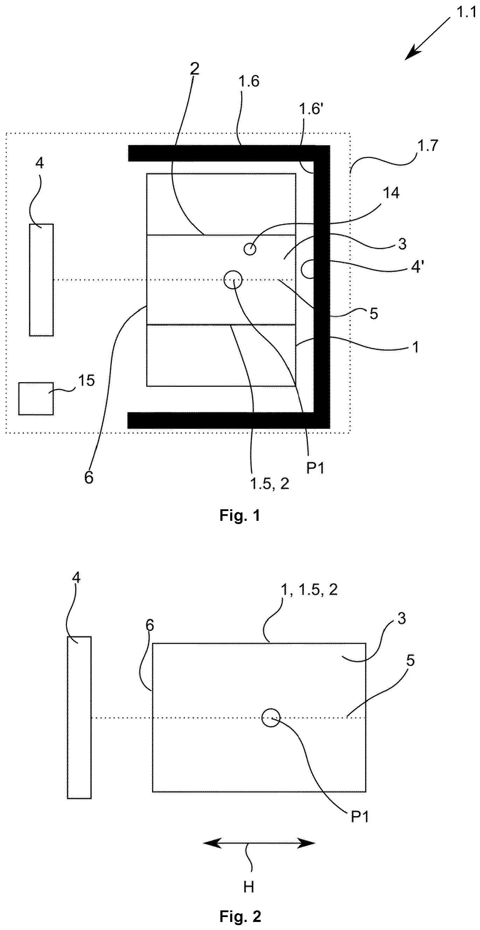

**Figur 1** zeigt eine schematische Ansicht einer Anordnung 1.1 gemäß einer beispielhaften Ausführungsform der vorliegenden Erfindung mit einer Szintillationsküvette 1 gemäß einer beispielhaften Ausführungsform der vorliegenden Erfindung. In der Szintillationsküvette 1, welche hier ein szintillationslichtdurchlässiges Szintillationsfläschchen ist, ist ein hier flüssiges Szintillationsmedium 3 angeordnet. In dem Szintillationsmedium 3 ist eine radioaktive Probe unter Ausbildung eines flüssigen Szintillationsgemischs gelöst.

Die Szintillationsküvette 1 weist weiterhin einen Flüssiglichtleiter 1.5 auf, welcher durch eine Lichtleiter-Wandung in Form eines Mantels 2 und das vom Mantel 2 umhüllt angeordnete Szintillationsmedium 3 mit der gelösten radioaktiven Probe gebildet ist. Bei einem einzelnen radioaktiven Zerfall emittiert die Probe ein Teilchen bzw. ein Strahlungsquant, welches mit den Molekülen des Szintillationsmediums 3 wechselwirkt und diese dabei zur Emission von Szintillationslicht anregt. Das emittierte Szintillationslicht wird zur Messung des radioaktiven Zerfalls von einem entsprechenden Detektor 4 registriert. In der dargestellten bevorzugten Ausführungsform weist der Detektor 4 einen Silizium-Photomultiplier auf. Der Brechungsindex des Szintillationsmediums 3 und des Szintillationsgemischs ist größer als der der Lichtleiter-Wandung, wodurch es zur Möglichkeit der Totalreflexion von Szintillationslicht in dem Flüssiglichtleiter 1.5 hin zu einem Fenster 6 kommt. Das Fenster 6 ist durch einen Abschnitt der Außenwand der Szintillationsküvette 1, also der Küvetten-Wandung, gebildet. Das Fenster 6 weist einen höheren Brechungsindex auf als die Lichtleiter-Wandung 2, so dass das Szintillationslicht bei geringerem Reflexionsanteil durch das Fenster 6 austreten kann. Es kann z.B. vorgesehen sein, dass der Brechungsindex des Fensters 6 größer ist als der Brechungsindex des Szintillationsmediums 3 und des Szintillationsgemischs, sodass das Szintillationslicht ohne Totalreflexion durch das Fenster 6 austreten kann. Vorliegend kann vorgesehen sein, dass die gesamte Außenwand der Szintillationsküvette 1 einen höheren Brechungsindex aufweist als die Lichtleiter-Wandung 2.

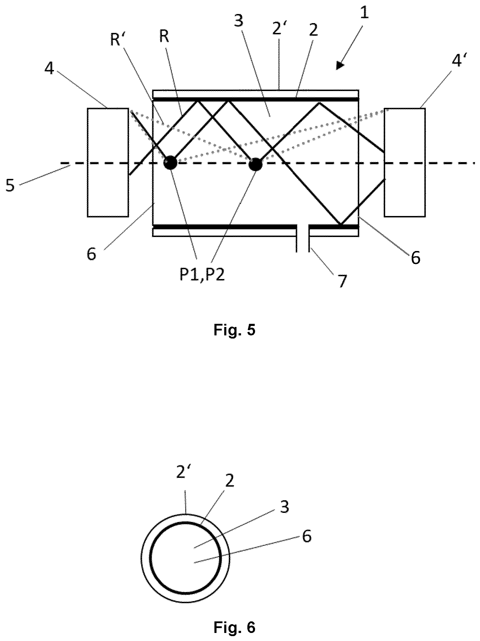

Das emittierte Szintillationslicht (hier nicht dargestellt, siehe beispielsweise Fig. 5), welches ausgehend von einer szintillierenden Punktquelle P1 auf den Detektor 4 trifft, kann den Detektor 4 beispielsweise direkt ohne Reflexion erreichen. Wird das von der szintillierenden Punktquelle P1 entsandte Szintillationslicht in einem größeren Winkel zur optischen Achse 5 abgestrahlt, so ist es dennoch wünschenswert, dass dieses Szintillationslicht nicht einfach die Szintillationsküvette 1 verlässt, ohne vom Detektor 4 registriert zu werden. Zur Verringerung dieses apparativen Quenchings weist die Szintillationsküvette 1 den Flüssigkeitslichtleiter 1.5 auf, welcher in der Lage ist, Szintillationslicht mittels Totalreflexion vom Szintillationsmedium 3 hin zum Detektor 4 zu leiten. Der Flüssiglichtleiter 1.5 weist hier einen Mantel 2 aus FEP auf, welcher durch die Lichtleiter-Wandung 2 gebildet ist. Möglich ist aber auch, dass er einen Mantel 2 aus PE oder einem Gemisch aus PE und FEP oder einem anderen Material, welches einen niedrigeren Brechungsindex aufweist als das Szintillationsmedium 3, aufweist. Das andere Material kann beispielsweise Teflon, Varianten davon oder weitere anorganische Materialien mit niedrigem Brechungsindex wie beispielsweise SiO2-Nanostäbe umfassen. Die Szintillationsküvette 1 ist in einem Probenhalter 1.6 angeordnet. Der Probenhalter 1.6 ist an einer ersten Seite zum Detektor 4 hin offen, so dass Szintillationslicht aus der Szintillationsküvette 1 auf den Detektor 4 fallen kann. Auf der der ersten Seite gegenüberliegenden zweiten Seite 1.6' des Probenhalters 1.6 weist der Probenhalter einen Reflektor 4' auf, welcher Licht, welches aus der Szintillationsküvette 1 vom Detektor 4 weg austritt, in diese zurückreflektiert und insbesondere auch in den Flüssiglichtleiter 1.5 einkoppelt. Der Reflektor 4' entspricht in Form und Größe vorzugsweise der Form und Größe der Stirnfläche der Szintillationsküvette 1.

Der Flüssiglichtleiter 1.5 ermöglicht durch seinen definierten Akzeptanzwinkel weiterhin eine Verringerung des Abstrahlwinkels des Szintillationslichtes. Damit ist es möglich, Detektoren 4 mit kleineren Detektionsflächen zu verwenden, was eine insgesamt sehr kompakte Bauweise der Anordnung 1.1 ermöglicht.

Eine Abschirmung 1.7, vorzugsweise eine Bleiabschirmung, sorgt für einen effektiven Schutz des Szintillationsmediums 3 vor externer ionisierender Strahlung, welche Messergebnisse verfälschen würde. Die Anordnung 1.1 weist einen Überwachungsdetektor 15 auf, welcher in die Messvorrichtung 1.1 eintretende externe ionisierende Strahlung misst und damit erlaubt, durch die externe ionisierende Strahlung verursachte Abweichungen der Messwerte zu korrigieren. Ebenfalls zur Korrektur der Messwerte verfügt die Messvorrichtung 1.1 über ein Referenznuklid 14. Die Intensität und das Energiespektrum des Referenznuklides 14 sind bekannt, so dass die ermittelten Messwerte an diesen kalibriert werden können.

**Figur 2** zeigt eine schematische Ansicht eines Details einer Anordnung 1.1 gemäß einer beispielhaften Ausführungsform der vorliegenden Erfindung mit einer Szintillationsküvette 1 gemäß einer beispielhaften Ausführungsform der vorliegenden Erfindung. Zur Verbesserung der Übersicht sind hier nur die Szintillationsküvette 1, der Flüssiglichtleiter 1.5 mit dem Szintillationsmedium 3 und dem Mantel 2, der Detektor 4 und die szintillierende Punktquelle P1 dargestellt. Anders als in der in Figur 1 dargestellten Ausführungsform, erstreckt sich der Flüssiglichtleiter 1.5 entlang der Seitenwände der Szintillationsküvette 1 parallel zur Haupterstreckungsrichtung H der Szintillationsküvette 1. Vorzugsweise ist vorgesehen, dass die Seitenwände der Szintillationsküvette 1 den Mantel 2 des Flüssiglichtleiters 1.5, also die Lichtleiter-Wandung, bilden (d.h. dass die seitlichen Außenwände bzw. die Mantelfläche der Szintillationsküvette 1 den Lichtleiter-Mantel 2 bilden). Der Flüssiglichtleiter 1.5 umfasst hier den gesamten Innenraum der Szintillationsküvette 1. Das von der szintillierenden Punktquelle P1 emittierte Licht tritt durch die Stirnfläche der Szintillationsküvette 1 in Richtung des Detektors 4 aus, wobei von dieser Stirnfläche ein Fenster 6 zum Hindurchlassen des Szintillationslichts gebildet ist. Gemäß dieser Ausführungsform hat also die als Fenster 6 fungierende Stirnfläche der Szintillationsküvette 1 einen größeren Brechungsindex als die als Lichtleiter-Mantel 2 fungierenden Seitenwände der Szintillationsküvette 1. Es kann insbesondere vorgesehen sein, dass der Brechungsindex der als Fenster 6 fungierende Stirnfläche der Szintillationsküvette 1 größer ist als der Brechungsindex des Szintillationsgemischs bzw. Szintillationsmediums 3, und dass der Brechungsindex der als Lichtleiter-Mantel 2 fungierenden Seitenwände der Szintillationsküvette 1 kleiner ist als der Brechungsindex des Szintillationsgemischs bzw. Szintillationsmediums 3. Nicht dargestellt ist der Probenhalter, welcher aber wie im Ausführungsbeispiel von Figur 1 über einen Reflektor verfügt, welcher an der Seite gegenüber der als Fenster 6 fungierenden Stirnfläche der Szintillationsküvette 1 austretendes Licht in den Flüssiglichtleiter 1.5 zurückreflektiert.

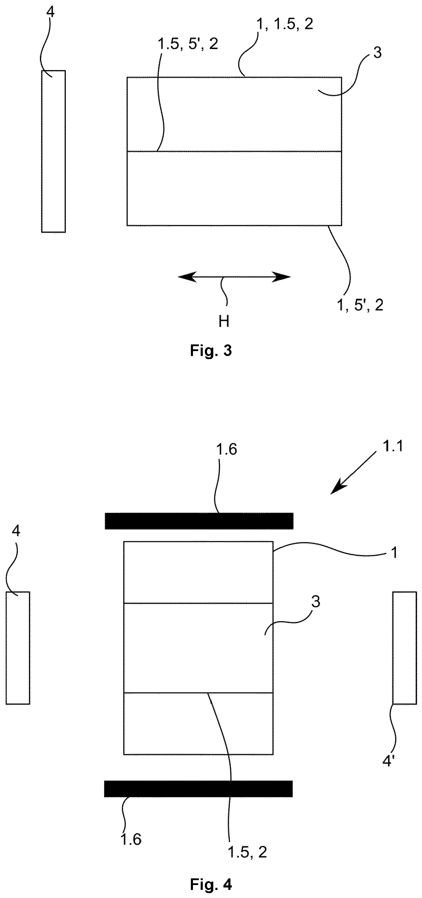

**Figur 3** zeigt eine schematische Ansicht eines Details einer Anordnung 1.1 gemäß einer beispielhaften Ausführungsform der vorliegenden Erfindung mit einer Szintillationsküvette 1 gemäß einer beispielhaften Ausführungsform der vorliegenden Erfindung. Figur 3 zeigt die in der Figur 2 dargestellte Ausführungsform mit dem Unterschied, dass die hier dargestellte Ausführungsform neben dem Flüssiglichtleiter 1.5 einen weiteren Flüssiglichtleiter 5' aufweist. Der weitere Flüssiglichtleiter 5' ist parallel zum Flüssiglichtleiter 1.5 angeordnet. Die Außenwände des Szintillationsküvette 1 bilden zusammen mit einer in der Szintillationsküvette 1 angeordneten Kunststoffschicht die Flüssiglichtleitermäntel 2, also die Lichtleiter-Wandungen, der Flüssiglichtleiter 1.5, 5`.

**Figur 4** zeigt eine schematische Ansicht einer Anordnung 1.1 gemäß einer beispielhaften Ausführungsform der vorliegenden Erfindung mit einer Szintillationsküvette 1 gemäß einer beispielhaften Ausführungsform der vorliegenden Erfindung. Dargestellt ist die in der Figur 1 gezeigte Ausführungsform mit dem Unterschied, dass die Messvorrichtung 1.1 einen an zwei Seiten offenen Probenhalter und einen weiteren Detektor 4' aufweist. Der weitere Detektor 4' ermöglicht zusammen mit dem Detektor 4 eine Koinzidenzmessung, mit welcher die Messwerte der Messvorrichtung 1.1 gegebenenfalls korrigiert werden können. Hier nicht dargestellt sind die Abschirmung, der Überwachungsdetektor, und das Referenznuklid.

**Figur 5** zeigt eine schematische Ansicht der Verwendung der Szintillationsküvette 1 gemäß einer beispielhaften Ausführungsform der vorliegenden Erfindung. Die Szintillationsküvette 1 erstreckt sich in die Länge und weist eine als Mantel 2 dienende Lichtleiter-Wandung auf, welche mit dem Szintillationsmedium 3 einen Flüssiglichtleiter ausbildet. Optional kann weiteres reflektierendes Material als zusätzlicher Reflektor 2' außerhalb der Szintillationsküvette 1 angeordnet sein. Das durch Szintillation erzeugte Szintillationslicht tritt über das Fenster 6 aus der Szintillationsküvette 1 aus und propagiert hier in Richtung Detektor 4. Ein Fenster 6 im Sinne der vorliegenden Erfindung ist ein Bereich der Szintillationsküvette 1 mit einer optischen Dichte, welche größer ist als die optische Dichte des Lichtleiter-Mantels 2, bevorzugt größer als die optische Dichte des Szintillationsgemischs und/oder Szintillationsmediums 3. Das Fenster 6 ist also ein Bereich, in dem es zu verminderter oder keiner Totalreflexion des Szintillationslichtes, sondern zu einer verstärkten Transmission des Szintillationslichtes durch das Fenster 6 kommt. Vorzugsweise kann ein Fenster 6 eine Aussparung des für den Flüssiglichtleiter notwendigen Mantels 2 sein, so dass keine Totalreflexion stattfindet. Denkbar ist auch die Verwendung von transparenten Materialien, wie beispielsweise Glas.

Das Szintillationslicht welches über die dem Fenster 6 gegenüberliegende Stirnfläche der Szintillationsküvette 1 austritt, kann entweder über einen weiteren Detektor 4' detektiert werden oder es wird über einen Reflektor 4' auf den Detektor 4 reflektiert und/oder in den Flüssiglichtleiter 1.5 eingekoppelt. Die Probe wird über eine Öffnung 7 in die Szintillationsküvette 1 eingefüllt. Um optische Verluste, welche an der Öffnung 7 auftreten, zu minimieren ist die Öffnung 7 für eine Szintillationsmessung vorzugsweise mit einem passgenauen Stopfen, beispielsweise aus FEP oder Polytetrafluorethylen (PTFE), flüssigkeitsdicht verschlossen.

Der Strahlengang R zeigt schematisch die vom Detektor 4 erfassten Abstrahlwinkel der szintillierenden Punktquellen P1 und P2 wenn der Mantel 2 der Szintillationsküvette 1 zusammen mit dem Szintillationsmedium 3 einen Flüssiglichtleiter bildet, während der Strahlengang R` den vom Detektor 4 erfassten Abstrahlwinkel ohne Totalreflexion an der Szintillator-Mantel-Grenzfläche zeigt.

Obwohl sich die szintillierende Punktquelle P2 im hier gezeigten Beispiel nur in 1 cm Abstand zur szintillierenden Punktquelle P1 befindet, ist der Anteil an Szintillationslicht, welcher den Detektor 4 auf direktem Weg von der Punktquelle P2 aus erreicht, wesentlich kleiner als für die szintillierende Punktquelle P1. In Raumwinkeln ausgedrückt, erreichen hier circa 120° (von 720°) von der szintillierenden Punktquelle P1 den Detektor 4 auf direktem Weg, bei P2 sind es ca. 20°. Vergleicht man damit die Anordnung 1.1 gemäß der hier dargestellten beispielhaften Ausführungsform der vorliegenden Erfindung, so ist der Raumwinkel, in den abgestrahltes Szintillationslicht den Detektor 4 erreicht, mindestens so groß wie der Akzeptanzwinkel des Flüssiglichtleiters. Für ein Szintillationsmedium 3 mit einem Brechungsindex von n=1,6 und FEP (mit einem Brechungsindex von n=1,34) als Mantel 2 bedeutet dies, dass hier statt 20° nun, aufgrund der Totalreflexion im Flüssiglichtleiter, ca. 30° des vollen Raumwinkels von der szintillierenden Punktquelle P2 den Detektor 4 erreichen. Der detektierte Anteil von der szintillierenden Punktquelle P1 und der szintillierenden Punktquelle P2, welcher in Richtung von Detektor/Reflektor 4` propagiert, liegt hier ohne Flüssiglichtleiter für die szintillierende Punktquelle P1 bei 10° und für die szintillierende Punktquelle P2 bei 20°, während bei Verwendung eines Flüssiglichtleiters hier sowohl für die szintillierende Punktquelle P1 als auch für die szintillierende Punktquelle P2 Raumwinkel von ca. 30° detektiert werden.

Es ist weiterhin erwähnt, dass das Szintillationslicht bei Austritt aus dem Fenster 6 aufgrund des Szintillator-Luft Übergangs einer Ablenkung vom Detektor 4 weg unterliegt, so dass die detektieren Raumwinkel noch kleiner ausfallen als oben angesprochen. Da das Fenster 6 der Szintillationsküvette 1 gemäß einer beispielhaften Ausführungsform der vorliegenden Erfindung wesentlich kleiner ist als die konventionell über das gesamte Probevolumen verteilte Austrittsfläche, hat auch der Effekt der Strahlablenkung an der Szintillator-Luft Grenzfläche eine geringere Auswirkung und kann durch Annähern des Detektors 4 bzw. der Detektoren 4, 4' an die Szintillationsküvette 1 kompensiert bzw. reduziert werden.

**Figur 6** zeigt schematisch die Stirnfläche der Szintillationsküvette aus Figur 5 mit dem Fenster 6. Zu erkennen sind weiterhin der Mantel 2, das Szintillationsmedium 3 sowie der zusätzliche Reflektor 2`.

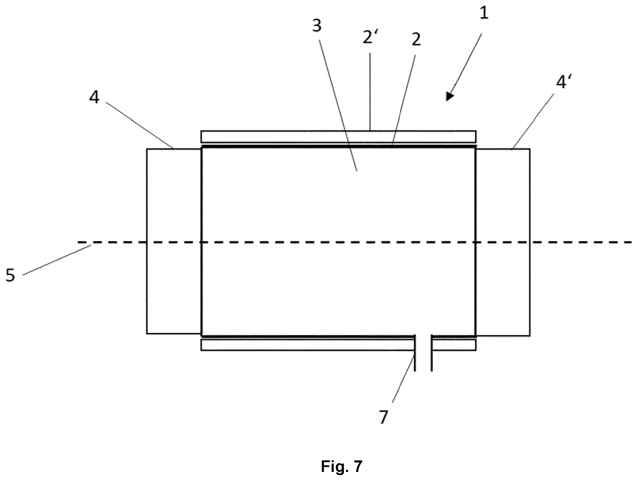

**Figur 7** zeigt eine schematische Ansicht einer Anordnung 1.1 gemäß einer weiteren beispielhaften Ausführungsform der vorliegenden Erfindung. Die Detektoren 4, 4' bzw. Detektor 4 und Reflektor 4' sind hier lückenlos an der Szintillationsküvette 1 angeordnet. Auf diese Weise werden zum einen die oben angesprochenen Brechungsverluste, und zum anderen Reflexionsverluste welche ebenfalls in der Szintillator-Luft Grenzfläche bedingt sind, unterbunden. Gemäß dieser beispielhaften Ausführungsform der vorliegenden Erfindung sind die Detektoren/Reflektoren 4, 4' und die Szintillationsküvette 1 vorzugsweise fest miteinander verbunden. Denkbar ist auch, dass die Detektoren 4, 4' bzw. Detektor 4 und Reflektor 4` nicht lückenlos an der Szintillationsküvette 1 angeordnet sind, sondern dass Spalte zwischen den Detektoren 4, 4' bzw. dem Detektor 4 und Reflektor 4' und der Szintillationsküvette 1 mit einer Immersionsflüssigkeit, beispielsweise einem Immersionsöl, gefüllt sind.

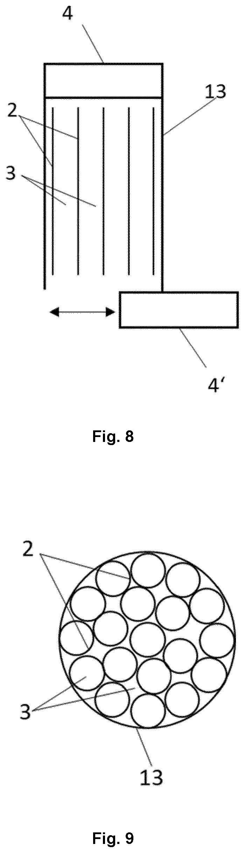

**Figur 8** zeigt eine schematische Ansicht einer Anordnung 1.1 gemäß einer beispielhaften Ausführungsform der vorliegenden Erfindung, in welcher das Probevolumen auf mehrere Flüssiglichtleiter verteilt ist. Hierdurch ist ein Befüllen über Kapillarkräfte möglich. Der Detektor 4 am oberen Ende ist vorzugsweise stationär, während am unteren Ende optional ein beweglicher zweiter Detektor 4' oder Reflektor 4' angeordnet ist. Das Szintillationsmedium 3 füllt vorzugsweise das gesamte Volumen der Szintillationsküvette 1 inklusive der Flüssiglichtleiterhohlräume, welche somit ebenfalls einen Flüssiglichtleiter bilden, aus.

**Figur 9** zeigt schematisch die Stirnfläche der Szintillationsküvette 1 aus Figur 8. Die vorzugsweise zylinderförmige Form ist günstig für die meisten Detektoren, eckige Varianten sind jedoch ebenfalls denkbar.

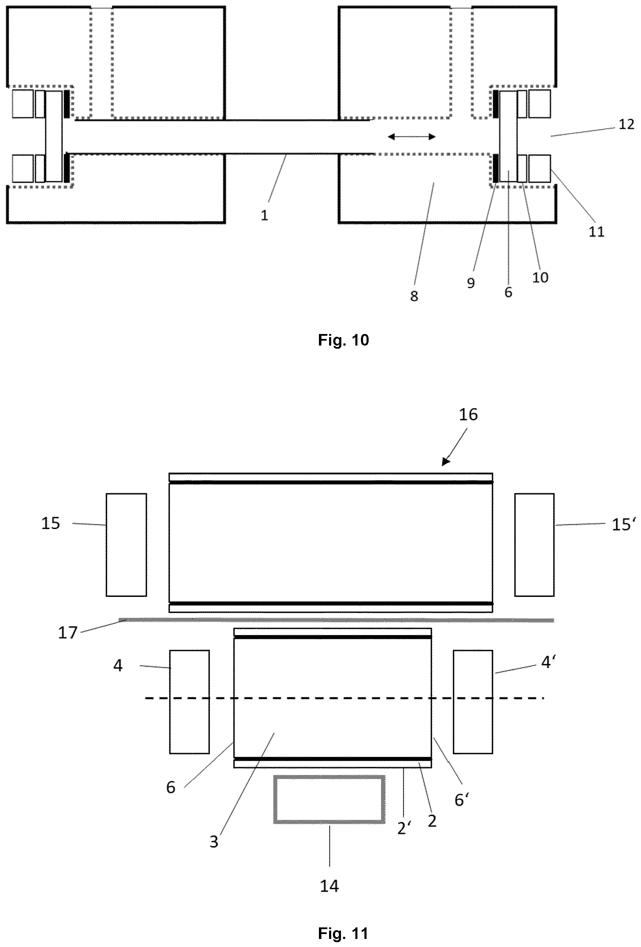

**Figur 10** zeigt schematisch ein Beispiel für einen modularen Aufbau einer Flüssigszintillationsmessung gemäß einer beispielhaften Ausführungsform der vorliegenden Erfindung. Der gezeigte modulare Aufbau enthält zwei Verteiler 8, in welche der zu bildende Flüssiglichtleiter bzw. die Szintillationsküvette1 hineingeschoben oder geschraubt werden kann. Dies ermöglicht einerseits eine leichte Demontage des Systems z.B. zu Reinigungszwecken andererseits kann die Szintillationsküvette 1 bei etwa halbem Einschub befüllt werden (rechte Seite von Figur 10), während bei vollem Einschub die Messung erfolgt (linke Seite von Figur 10).

Über die Verteiler 8 findet vorzugsweise auch das Be- und Entfüllen der Anordnung 1.1 statt. Der Verteiler 8 ist vorzugsweise mit einem Verschluss versehen, welcher das Fenster der Szintillationsküvette 1 bildet. Der Verschluss kann dabei eine Glasplatte oder ähnliches sein. Auf der anderen Seite des Fensters befindet sich ein Anschluss 11 für einen Detektor oder ein optisches Koppelelement, welche über Öffnung 12 ebenfalls eingeschoben oder eingeschraubt werden können.

Um Verluste beim Szintillator-Luft Übergang zu unterbinden, kann der verbleibende Spalt zwischen Detektor und Fenster 6 mit einer Immersionsflüssigkeit gefüllt werden. Die Fensterhalterung 10, beispielsweise eine Verschraubung für das Fenster 6, und die Halterung für den Detektor 11 kann auch als ein Bauteil ausgeführt werden. In einer weiteren alternativen Ausführung von Figur 6 kann auf den Verschluss verzichtet werden und der Detektor wird dichtend mit Hilfe von Dichtelementen, beispielsweise eines Dichtungsringes 9, in den optischen Verteilereingang geschraubt oder geschoben.

**Figur 11** zeigt eine beispielhafte Anwendung der Anordnung 1.1 zusammen mit einem externen Referenznuklid 14 und einer als Überwachungsdetektorsystem ausgebildeten Überwachungszelle 16. Die Anwendung kann auch nur mit dem Referenznuklid 14 oder nur mit der Überwachungszelle 16 erfolgen. Die Überwachungszelle 16 ist bevorzugt oberhalb der Szintillationsküvette 1 angebracht und etwas länger als die diese, um kosmische Strahlung effizient zu registrieren. Die Überwachungszelle 16 weist eine Szintillationsküvette, vorzugsweise eine Szintillationsküvette gemäß einer beispielhaften Ausführungsform der vorliegenden Erfindung, auf. Zur Registrierung externer ionisierender Strahlung sind an der Szintillationsküvette der Überwachungszelle 16 ein erster Überwachungsdetektor 15 und vorzugsweise ein zweiter Überwachungsdetektor 15' angeordnet.

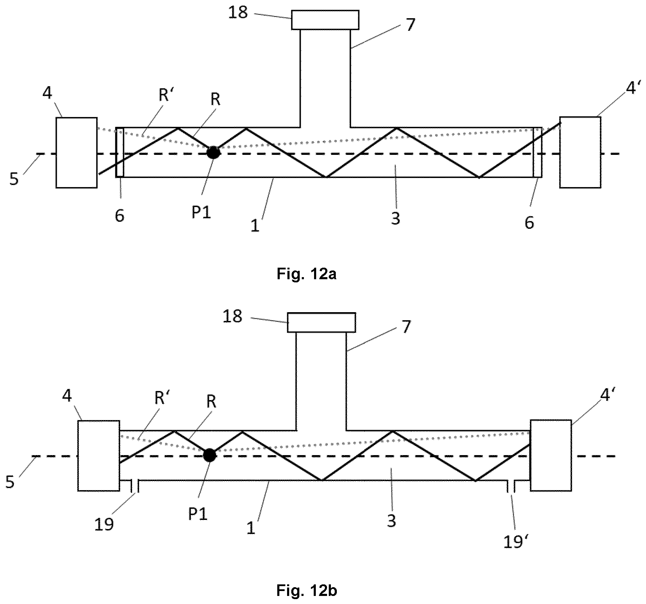

**Figur 12** zeigt eine Anordnung 1.1 gemäß einer beispielhaften Ausführungsform der vorliegenden Erfindung, welche in einem herkömmlichen LSC-Gerät z.B. bei der Messung von ¹⁴C in einer brennbaren Feststoffprobe Verwendung finden kann. Im gezeigten beispielhaften Verfahren wird die radioaktive Probe in einem ersten Schritt einem physikalisch, chemischen Trennungsgang unterzogen (Prä-analytik z.B. katalytische Verbrennung bei ¹⁴C). Die so vorpräparierte Probe wird wie oben beschrieben dem Szintillationsmedium zugegeben (Bsp. ¹⁴C; Szintillator ist ein CO₂-Absorber). Vorzugsweise wird das Szintillationsmedium mit der Probe direkt in einen Flüssiglichtleiter verbracht bzw. direkt in diesem gemischt.

Die flüssiglichtleitende Szintillationsküvette 1 kann hierbei bevorzugt die Form eines auf dem Kopf stehenden T-Stücks besitzen. Die Anordnung 1.1 in der hier gezeigten beispielhaften Ausführungsform der vorliegenden Erfindung weist keine Verteiler wie etwa in Figur 10 auf. Der nach oben zeigende Ausgang 7 dient hier der Befüllung der Szintillationsküvette 1, die beiden optischen Ausgänge 12 dienen als Fenster 6 und sind auf die jeweiligen Detektoren 4 und 4` gerichtet.

Als Fenster 6 kann z.B. hochreines Quarzglas verwendet werden. Die Aufnahme der gemischten Probe erfolgt bevorzugt über simples Eingießen, das Aufziehen durch Spritzen oder Kapillarkräfte oder über Membran-, Kreisel- oder Peristaltikpumpen.

Die Fenster 6 sind vorzugsweise direkt an der Szintillationsküvette 1 fixiert und/oder an den Detektoren 4 und 4` fixiert. Die zu wählende Anordnung ist hierbei von der Art der eingesetzten Detektoren 4, 4` abhängig. Zielstellung beim Einsatz der Fenster 6 sollte es sein, die Einbringung weiterer optischer Grenzflächenübergänge zwischen Flüssiglichtleiter und Detektor 4, 4' so gering als möglich zu halten.

In diesem Zusammenhang kann die Ausführung der Lichtleiter variieren:
a) Lichtleiter als wechselbares Probenbehältnis, welches nach allen optischen Ausgängen separat mit einem Fenster 6 verschlossen ist. Dies hat zur Folge, dass Verluste beim optischen Grenzflächenübergang auftreten. In dieser Ausführung würde der Probenwechsel automatisch erfolgen können, beispielsweise mit einer Revolveranordnung.
b) Lichtleiter in der Messvorrichtung 1.1 fest verbaut. Dies beinhaltet, dass der Detektor 4, 4' selber den Verschluss des Lichtleiters darstellt, was zu einer Einsparung weiterer optischer Übergänge führt. In dieser Ausführung würde der Probenzuführung über Membran-, Kreisel- oder Peristaltikpumpen direkt erfolgen. Die Anzahl der optischen Ausgänge 12 aus der Szintillationsküvette 1 kann dabei zwischen einem Ausgang und mehren Ausgängen variieren (auch mehr als zwei).

Für die Messung können bevorzugt Koinzidenzschaltungen mit zwei Detektoren 4, 4' oder Schaltungen mit einem Detektor 4 und externem oder internem Reflektor 4' verwendet werden. Dabei können die optischen Ausgänge einzeln oder als Bündel vorliegen.

Kurz vor den optischen Ausgängen ist der Flüssiglichtleiter jeweils vorzugsweise mit einer Spülklappe 19 und 19' versehen. Diese Spülklappen 19, 19' können flüssigkeitsdicht verschlossen werden. Hierbei können beispielsweise FEP oder PTFE Stopfen Verwendung finden, um die an den Spülklappen 19, 19' auftretenden optischen Verluste zu minimieren. Nach erfolgter Messung dienen diese Spülklappen 19, 19' vorzugsweise der Reinigung der Szintillationsküvette 1, durch Spülung mit verschiedenen Reinigungssubstanzen.

Der in die Szintillationsküvette 1 verbrachte die Probe und das Szintillationsmedium aufweisende ¹⁴C-Messcocktail szintilliert und die entstehenden Fluoreszenzemissionen, also das Szintillationslicht, werden zu dem oder den Detektoren 4, 4' geleitet. Auf Grundlage der dabei generierten Verbesserung der apparatebedingten Quantenausbeute ist an den dem oder den Detektoren 4, 4' ein besseres Signal detektierbar.

Zur Korrektur des Quenchings kann begleitend ein externes Radionuklid oder die SIS-Methode verwendet werden. In Messbereichen mit hoher externer ionisierender Strahlung können zusätzlich Bleiabschirmungen oder Überwachungsdetektoren zum Einsatz kommen. Die Minimierung des Quenchings geht hier mit einer Verbreiterung der Spektren hin zu höheren Kanälen einher. Das Signal wird vorzugsweise folgend einer mathematischen Auswerteprozedur unterzogen, wobei beispielsweise Beta-Endpunktbestimmung und/oder maximale Bandenlagen für eine Diskriminierung der einzelnen Spektren verschiedener betastrahlender Nuklide herangezogen werden.

Die Ausführung in Figur 12 kann auch verwendet werden, um abgereicherte radioaktive Proben oder Proben mit Verdacht auf Radioaktivität kurz vor ihrer finalen Entsorgung bzw. Freigabe auf ihre Aktivität zu überprüfen. Hierbei ist vorzugsweise auch ein Einbau der Anordnung 1.1 in eine Prozesskette vorgesehen. Umgekehrt lässt sich die Messvorrichtung auch verwenden, um radioaktive Anreicherungsprozesse zu überwachen. Hierbei wird beispielsweise das ¹⁴CO₂ welches bei der Verbrennung im oben genannten Beispiel entsteht über Öffnung 7 in die Szintillationszelle geleitet und über die Zählrate die ¹⁴CO₂ Absorption beobachtet.

### Bezugszeichenliste

- 1.1: Anordnung
- 1: Szintillationsküvette
- 1.6: Probenhalter
- 1.6': zweite Seite des Probenhalters
- 1.7: Abschirmung
- 2: Mantel
- 2': zusätzlicher Reflektor
- 3: Szintillationsmedium
- 4: Detektor
- 4`: weiterer Detektor oder Reflektor
- 1.5: Flüssiglichtleiter
- 5: optische Ache
- 5`: weiterer Flüssiglichtleiter
- 6: Fenster
- 7: Öffnung
- 8: Verteiler
- 9: Dichtungsring
- 10: Fensterhalterung
- 11: Halterung für Detektor oder Kopplungsoptik
- 12: Öffnung für Detektor oder Kopplungsoptik
- 13: Gehäuse
- 14: internes Referenznuklid
- 15: (erster) Überwachungsdetektor
- 15': zweiter Überwachungsdetektor
- 16: Überwachungszelle mit Szintillator, ähnlich wie Szintillationsküvette 1, aber ohne Probe
- 17: optische Abschirmung
- 18: Verschlusskappe
- 19: erste Spülklappe
- 19`: zweite Spülklappe

- H: Haupterstreckungsebene
- R: Strahlenverlauf mit Flüssiglichtleiter
- R`: Strahlenverlauf ohne Flüssiglichtleiter
- P1, P2: szintillierende Punktquellen

## Patentansprüche

1. Szintillationsküvette (1) zur Messung ionisierender Strahlung aufweisend eine Lichtleitungsstruktur mit einer Lichtleiter-Wandung mit einem ersten Brechungsindex und einem Fenster (6) mit einem zweiten Brechungsindex, ferner aufweisend ein in der Szintillationsküvette (1) angeordnetes Szintillationsmedium (3) mit einem vorgegebenen Brechungsindex, der größer als der erste Brechungsindex ist, wobei der erste Brechungsindex geringer ist als der zweite Brechungsindex.

2. Szintillationsküvette (1) nach Anspruch 1, wobei die Lichtleiter-Wandung zum Totalreflektieren von Szintillationslicht in Richtung des Fensters (6) geeignet ist, wobei die Lichtleiter-Wandung als Mantel (2) eines Lichtleiters vorgesehen ist.

3. Szintillationsküvette (1) nach einem der vorhergehenden Ansprüche, wobei die Szintillationsküvette (1) zumindest im Bereich des Fensters (6) lichtdurchlässig für Szintillationslicht ist, wobei die Szintillationsküvette (1) vorzugsweise ein Szintillationsfläschchen ist.

4. Szintillationsküvette (1) nach einem der vorhergehenden Ansprüche, wobei die Lichtleiter-Wandung durch eine umlaufende Mantelfläche der Szintillationsküvette (1) gebildet ist.

5. Szintillationsküvette (1) nach einem der Ansprüche 1 bis 3, wobei die Lichtleiter-Wandung zumindest teilweise im Inneren der Szintillationsküvette (1) angeordnet ist.

6. Szintillationsküvette (1) nach einem der vorhergehenden Ansprüche, wobei das Fenster (6) durch eine Stirnfläche der Szintillationsküvette (1) gebildet ist.

7. Szintillationsküvette (1) nach einem der vorhergehenden Ansprüche, wobei der zweite Brechungsindex größer ist als der vorgegebene Brechungsindex des Szintillationsmediums (3).

8. Szintillationsküvette (1) nach einem der Ansprüche 1 bis 7, wobei die Szintillationsküvette (1) wenigstens eine weitere Lichtleitungsstruktur mit einer Lichtleiter-Wandung und/oder einer weiteren Lichtleiter-Wandung aufweist, wobei die weitere Lichtleiter-Wandung einen geringeren Brechungsindex aufweist als das Fenster (6) und/oder ein weiteres Fenster, wobei die Lichtleiter-Wandung als Mantel eines Lichtleiters vorgesehen ist, wobei die Lichtleiter-Wandung und/oder die weitere Lichtleiter-Wandung als Mantel eines weiteren Lichtleiters vorgesehen sind, wobei der wenigstens eine weitere Lichtleiter parallel zum Lichtleiter angeordnet ist.

9. Szintillationsküvette (1) nach einem der vorhergehenden Ansprüche, wobei ein Szintillationsmedium (3) zumindest teilweise innerhalb der Lichtleiter-Wandung und/oder der weiteren Lichtleiter-Wandung angeordnet ist, wobei durch das Szintillationsmedium (3) und die Lichtleiter-Wandung und/oder die weitere Lichtleiter-Wandung ein Flüssiglichtleiter (1.5) bzw. ein weiterer Flüssiglichtleiter (5') gebildet ist.

10. Szintillationsküvette (1) nach einem der Ansprüche 1 bis 9, wobei die Szintillationsküvette (1) eine Haupterstreckungsrichtung (H) aufweist, wobei die Lichtleiter-Wandung als Mantel eines Lichtleiters vorgesehen ist, und wobei der Lichtleiter parallel zur Haupterstreckungsrichtung (H) angeordnet ist.

11. Szintillationsküvette (1) nach einem der Ansprüche 1 bis 10, wobei die Lichtleiter-Wandung als Mantel eines Lichtleiters vorgesehen ist, und wobei zusätzliche reflektierende Elemente um den Lichtleiter und/oder um den weiteren Lichtleiter angeordnet sind.

12. Anordnung (1.1) zur Erfassung ionisierender Strahlung, aufweisend eine Szintillationsküvette (1) nach einem der vorhergehenden Ansprüche, und einen Detektor (4), wobei der Detektor (4) zum Erfassen von aus dem Fenster (6) austretendem Szintillationslicht angeordnet ist.

13. Anordnung (1.1) nach Anspruch 12, wobei die Anordnung einen Probenhalter (6) umfasst, wobei die Szintillationsküvette (1) in dem Probenhalter (6) angeordnet ist, wobei der Probenhalter (6) an seiner dem Detektor (4) zugewandten ersten Seite eine Öffnung aufweist, wobei der Probenhalter (6) vorzugsweise zumindest an seiner der ersten Seite gegenüberliegenden zweiten Seite (6') einen Reflektor zum Reflektieren von Licht aufweist.

14. Anordnung (1.1) nach einem der Ansprüche 12 bis 13, wobei der Detektor (4) einen Silizium-Photomultiplier aufweist.

15. Anordnung (1.1) nach einem der Ansprüche 12 bis 14, wobei die Anordnung (1) einen weiteren Detektor (4') aufweist, wobei die Szintillationsküvette (1) zwischen dem Detektor (4) und dem weiteren Detektor (4') angeordnet ist.

## Claims

1. Scintillation cuvette (1) for measuring ionizing radiation, comprising a light-guiding structure having a light-guide wall with a first refractive index and a window (6) with a second refractive index, further comprising a scintillation medium (3) with a specified refractive index greater than the first refractive index arranged in the scintillation cuvette (1), with the first refractive index being lower than the second refractive index.

2. Scintillation cuvette (1) according to Claim 1, wherein the light-guide wall is suitable for reflecting scintillation light in the direction of the window (6) by total-internal reflection, with the light-guide wall being provided as lateral surface (2) of a light guide.

3. Scintillation cuvette (1) according to either of the preceding claims, wherein the scintillation cuvette (1) is light-transmissive for scintillation light at least in the region of the window (6), with the scintillation cuvette (1) preferably being a scintillation vial.

4. Scintillation cuvette (1) according to any of the preceding claims, wherein the light-guide wall is formed by a circumferential lateral surface of the scintillation cuvette (1).

5. Scintillation cuvette (1) according to any of Claims 1 to 3, wherein the light-guide wall is at least partially arranged in the interior of the scintillation cuvette (1) .

6. Scintillation cuvette (1) according to any of the preceding claims, wherein the window (6) is formed by an end face of the scintillation cuvette (1).

7. Scintillation cuvette (1) according to any of the preceding claims, wherein the second refractive index is greater than the specified refractive index of the scintillation medium (3).

8. Scintillation cuvette (1) according to any of Claims 1 to 7, wherein the scintillation cuvette (1) comprises at least one further light-guiding structure having a light-guide wall and/or a further light-guide wall, the further light-guide wall having a lower refractive index than the window (6) and/or a further window, the light-guide wall being provided as lateral surface of a light guide, the light-guide wall and/or the further light-guide wall being provided as lateral surface of a further light guide, and the at least one further light guide being arranged parallel to the light guide.

9. Scintillation cuvette (1) according to any of the preceding claims, wherein a scintillation medium (3) is at least partially arranged within the light-guide wall and/or the further light-guide wall, a liquid light guide (1.5) or a further liquid light guide (5') being formed by the scintillation medium (3) and the light-guide wall and/or the further light-guide wall.

10. Scintillation cuvette (1) according to any of Claims 1 to 9, wherein the scintillation cuvette (1) has a main direction of extent (H), the light-guide wall being provided as lateral surface of a light guide and the light guide being arranged parallel to the main direction of extent (H).

11. Scintillation cuvette (1) according to any of Claims 1 to 10, wherein the light-guide wall is provided as lateral surface of a light guide and wherein additional reflective elements are arranged around the light guide and/or around the further light guide.

12. Arrangement (1.1) for sensing ionizing radiation, comprising a scintillation cuvette (1) according to any of the preceding claims and a detector (4), wherein the detector (4) is arranged to sense scintillation light emerging from the window (6).

13. Arrangement (1.1) according to Claim 12, wherein the arrangement comprises a sample holder (6), the scintillation cuvette (1) being arranged in the sample holder (6), the sample holder (6) having an opening in its first side facing the detector (4) and the sample holder (6) comprising a reflector for reflecting light, preferably at least on its second side (6') opposite the first side.

14. Arrangement (1.1) according to either of Claims 12 and 13, wherein the detector (4) comprises a silicon photomultiplier.

15. Arrangement (1.1) according to any of Claims 12 to 14, wherein the arrangement (1) comprises a further detector (4'), the scintillation cuvette (1) being arranged between the detector (4) and the further detector (4').

## Revendications

1. Cuvette à scintillation (1) destinée à la mesure d'un rayonnement ionisant, ladite cuvette à scintillation comportant une structure de guidage de lumière pourvue d'une paroi de guidage de lumière présentant un premier indice de réfraction et d'une fenêtre (6) présentant un deuxième indice de réfraction, ladite cuvette à scintillation comportant en outre un milieu de scintillation (3) disposé dans la cuvette à scintillation (1) et présentant un indice de réfraction spécifié qui est supérieur au premier indice de réfraction, le premier indice de réfraction étant inférieur au deuxième indice de réfraction.

2. Cuvette à scintillation (1) selon la revendication 1, la paroi de guidage de lumière étant adaptée pour réfléchir totalement la lumière de scintillation en direction de la fenêtre (6), la paroi de guidage de lumière étant prévue sous la forme d'une gaine (2) d'un guide de lumière.

3. Cuvette à scintillation (1) selon l'une des revendications précédentes, la cuvette à scintillation (1) étant transparente à la lumière de scintillation au moins dans la zone de la fenêtre (6), la cuvette à scintillation (1) étant de préférence un flacon à scintillation.

4. Cuvette à scintillation (1) selon l'une des revendications précédentes, la paroi de guidage de lumière étant formée par une surface latérale circonférentielle de la cuvette à scintillation (1).

5. Cuvette à scintillation (1) selon l'une des revendications 1 à 3, la paroi de guidage de lumière étant au moins partiellement disposée à l'intérieur de la cuvette à scintillation (1).

6. Cuvette à scintillation (1) selon l'une des revendications précédentes, la fenêtre (6) étant formée par une surface frontale de la cuvette à scintillation (1) .

7. Cuvette à scintillation (1) selon l'une des revendications précédentes, le deuxième indice de réfraction étant supérieur à l'indice de réfraction spécifié du milieu de scintillation (3).

8. Cuvette à scintillation (1) selon l'une des revendications 1 à 7, la cuvette à scintillation (1) comportant au moins une autre structure de guidage de lumière pourvue d'une paroi de guidage de lumière et/ou d'une autre paroi de guidage de lumière, l'autre paroi de guidage de lumière présentant un indice de réfraction inférieur à celui de la fenêtre (6) et/ou d'une autre fenêtre, la paroi de guidage de lumière étant prévue sous la forme d'une gaine d'un guide de lumière, la paroi de guidage de lumière et/ou l'autre paroi de guidage de lumière étant prévues sous la forme d'une gaine d'un autre guide de lumière, l'au moins un autre guide de lumière étant disposé parallèlement au guide de lumière.

9. Cuvette à scintillation (1) selon l'une des revendications précédentes, un milieu de scintillation (3) étant disposé au moins partiellement à l'intérieur de la paroi de guidage de lumière et/ou de l'autre paroi de guidage de lumière, un guide de lumière liquide (1.5) ou un autre guide de lumière liquide (5') étant formé par le milieu de scintillation (3) et la paroi de guidage de lumière et/ou l'autre paroi de guidage de lumière.

10. Cuvette à scintillation (1) selon l'une des revendications 1 à 9, la cuvette à scintillation (1) présentant une direction d'extension principale (H), la paroi de guidage de lumière étant prévue sous la forme d'une gaine d'un guide de lumière, et le guide de lumière étant disposé parallèlement à la direction d'extension principale (H).

11. Cuvette à scintillation (1) selon l'une des revendications 1 à 10, la paroi de guidage de lumière étant prévue sous la forme d'une gaine d'un guide de lumière, et des éléments réfléchissants supplémentaires étant disposés autour du guide de lumière et/ou autour de l'autre guide de lumière.

12. Ensemble (1.1) destiné à détecter un rayonnement ionisant, ledit ensemble comprenant une cuvette à scintillation (1) selon l'une des revendications précédentes, et un détecteur (4), le détecteur (4) étant disposé de manière à détecter la lumière de scintillation sortant par la fenêtre (6).

13. Ensemble (1.1) selon la revendication 12, l'ensemble comprenant un porte-échantillon (6), la cuvette à scintillation (1) étant disposée dans le porte-échantillon (6), le porte-échantillon (6) comportant une ouverture sur son premier côté dirigé vers le détecteur (4), le porte-échantillon (6) comportant de préférence un réflecteur destiné à réfléchir la lumière au moins sur son deuxième côté (6') opposé au premier côté.

14. Ensemble (1.1) selon l'une des revendications 12 à 13, le détecteur (4) comportant un photomultiplicateur au silicium.

15. Ensemble (1.1) selon l'une des revendications 12 à 14, le dispositif (1) comportant un autre détecteur (4'), la cuvette à scintillation (1) étant disposée entre le détecteur (4) et l'autre détecteur (4').
